# EUROPÄISCHE PATENTSCHRIFT

(11) **EP 1 781 061 B1**
(45) Veröffentlichungstag und Bekanntmachung des Hinweises auf die Patenterteilung: **25.04.2018**
(21) Anmeldenummer: 06016998.4
(22) Anmeldetag: 16.08.2006
(51) Int. Cl.: H04L 12/40, H04L 12/403, H04W 84/18, H04W 84/22, H04W 74/08, H04W 52/02

(54) **Verfahren zur Kommunikation mehrerer Sensorknoten in einem Sensornetzwerk**
Method for communication of several sensor nodes in a sensor network
Procédé de communication entre plusieurs noeuds capteurs dans un réseau de capteurs

(30) Priorität: 26.10.2005 DE 102005051563
(43) Veröffentlichungstag der Anmeldung: 02.05.2007
(73) Patentinhaber: ista International GmbH, 45131 Essen (DE)
(72) Erfinder: Gronauer, Manfred, 45289 Essen (DE); Bley, Bert, 45131 Essen (DE)
(74) Vertreter: Cohausz, Helge B.

(56) Entgegenhaltungen:
- US-A1- 2005 058 151
- US-A1- 2005 122 231

## Beschreibung

Die Erfindung betrifft ein Verfahren zur Kommunikation mehrerer Sensorknoten in einem Sensornetzwerk mit einem Empfangsknoten, insbesondere einem Sensorknoten des Sensornetzwerkes, wobei ein Empfangsknoten durch Aussendung wenigstens eines Synchronisationstelegramms andere Sensorknoten auffordert, Sensordaten an den Empfangsknoten zu übersenden, wofür der Empfangsknoten, insbesondere nach Aussendung des wenigstens einen Synchronisationstelegrammes, für eine Zeitdauer, insbesondere für eine so genannte CAP-Phase (Contention-Access-Period), auf Empfang geht, um Telegramme von wenigstens einem anderen Sensorknoten zu empfangen.

Derartige Sensornetzwerke werden z.B. eingesetzt im Bereich der Verbrauchsdatenerfassung, z.B. bei der Erfassung von Verbrauchsdaten über Stromverbrauch, Gasverbrauch, Heizwärmeverbrauch, Wasserverbrauch oder sonstiger Ressourcen, die von einem Anbieter an einen Empfänger in Rechnung gestellt werden.

Um zu vermeiden, dass Ablesepersonal in die einzelnen verschiedenen Wohnungen kommen muss, um Verbrauchszähler separat vor Ort abzulesen, ist es demnach im Stand der Technik bekannt, die Geräte zur Verbrauchsdatenerfassung in ein Netzwerk einzugliedern, in welchem diese Geräte miteinander kommunizieren können. Da es sich bei derartigen Geräten zur Verbrauchsdatenerfassung üblicherweise um Geräte mit Sensoren handelt, werden diese im Rahmen des Netzwerkverbundes auch als Sensorknoten bezeichnet.

Üblicherweise werden bei derartigen Sensornetzwerken die Verbrauchsdaten, die bei den in dem Netzwerk angeordneten Sensorknoten erfasst werden, mittels einer Weiterleitung über die einzelnen Sensorknoten zu einer zentralen Erfassungsstelle geleitet, wo die einzelnen Verbrauchsdaten gesammelt und sodann für die Abrechnung zur Verfügung gestellt werden können. Beispielsweise kann Ablesepersonal die Daten an der zentralen Erfassungsstelle abholen, gegebenenfalls ist es auch möglich, die zentral zusammengefassten Daten per Datenfernübertragung weiterzuleiten.

In einem derartigen Sensornetzwerk mit einer Vielzahl von Sensorknoten ist es demnach bekannt, die einzelnen Daten über die verschiedenen Sensorknoten weiterzuleiten, was bedeutet, dass ein Sensorknoten sowohl als sendender Sensorknoten als auch als empfangender Sensorknoten arbeiten kann. Im Rahmen der vorliegenden Erfindungsbeschreibung wird ein Sensorknoten, sofern er in seiner Eigenschaft als empfangender Sensorknoten betrachtet wird, als Empfangsknoten bezeichnet. Im Beispiel des vorgenannten Standes der Technik kann ein Empfangsknoten somit eine zentrale Sammelstelle darstellen als auch jeden beliebigen Sensorknoten des Sensornetzwerkes, über den die Daten weitergeleitet werden.

In derartigen Sensornetzwerken ist es weiterhin bekannt, dass eine Vielzahl von Sensorknoten mit einem Empfangsknoten in Verbindung treten möchten, um aufgelaufene Daten über Verbrauchswerte oder gegebenenfalls auch andere Daten, wie beispielsweise Statusmeldungen oder Fehlermeldungen, weiterzuleiten. Hierbei wird üblicherweise eine Wegoptimierung bezüglich des Transportwegs der Daten durch die einzelnen Sensorknoten anhand vorgegebener Kriterien gewählt, so dass es vorkommen kann, dass eine Vielzahl von Sensorknoten mit einem bestimmten Empfangsknoten kommunizieren möchte, da der Weg über diesen speziellen Empfangsknoten als optimal oder zumindest bevorzugt gegenüber anderen Wegen klassifiziert ist.

Dementsprechend ist es im Stand der Technik weiterhin bekannt, dass es zu Kollisionen von Telegrammen also z.B. Datensendungen oder sonstigen Sendungen kommen kann, die die Sensorknoten mit einem Empfangsknoten austauschen wollen, da gegebenenfalls mehrere Sensorknoten gleichzeitig auf Sendung gehen und dementsprechend ein Empfang für einen Empfangsknoten nicht möglich ist, da die einzelnen Telegramme bzw. Datensendungen nicht diskriminiert werden können, weil sie zeitlich kollidieren.

Hierbei wird unter einem Telegramm im Rahmen der nachfolgenden weiteren Erfindungsbeschreibung ein abgeschlossenes Paket mit Daten jeglicher Art verstanden, die zwischen zwei Knoten des Netzwerkes kommuniziert werden. Dementsprechend kann es sich um Statusdaten, Synchronisationsdaten, Verbrauchsdaten oder sonstigen Daten handeln.

Im Stand der Technik ist es weiterhin bekannt, dass sich Sensorknoten für den Datenaustausch mit einem Empfangsknoten, synchronisieren müssen, um einen Datenaustausch im Anschluss an diese Synchronisation im Rahmen eines vorbestimmten Austauschprotokolls vornehmen zu können.

Aus energetischen Gründen ist es dabei vorgesehen, dass ein Empfangsknoten zunächst wenigstens ein sogenanntes Synchronisationstelegramm aussendet, welches anderen Sensorknoten, die ein derartiges Synchronisationstelegramm empfangen, signalisiert, dass der Empfangsknoten für einen Empfang zur Verfügung steht. Um ein derartiges Synchronisationstelegramm empfangen zu können, besteht dabei die Notwendigkeit, dass die Sensorknoten zu dem Zeitpunkt der Aussendung dieses Synchronisationstelegramms in Empfangsbereitschaft stehen, wofür üblicherweise ein Sensorknoten über die Zeitdauer eines Empfangsfensters seine interne Empfangseinheit aktiviert. Um demnach eine zeitliche Überlappung zwischen Aussendung des Synchronisationstelegramms und der Öffnung eines Empfangsfensters zu erreichen, ist es bekannt, in den einzelnen Sensor- bzw. Empfangsknoten entsprechende interne Uhrsysteme vorzusehen.

Nach Aussendung eines Synchronisationstelegramms geht üblicherweise der sendende Empfangsknoten für eine Zeitdauer, welche insbesondere vorbestimmt sein kann, auf Empfang, um sodann innerhalb dieser Zeitdauer Telegramme empfangen zu können, die von umliegenden Sensorknoten ausgesendet werden, welche beispielsweise Daten oder sonstige Informationen an den Empfangsknoten weiterleiten möchten. Dabei kann es vorgesehen sein, dass die sendenden Sensorknoten miteinander in den Wettbewerb treten, um dem Empfangsknoten Telegramme zuzusenden.

Hierbei kann es wie zuvor genannt zu Kollisionen von ausgesendeten Telegrammen kommen, wenn mehrere Sensorknoten gleichzeitig ihre Telegramme absenden.

Dementsprechend kann es vorkommen, dass nach Aussendung eines Sensortelegramms der aussendende Empfangsknoten nicht in der Lage ist, zumindest ein Telegramm zu diskriminieren, um eine Kommunikation mit dem sendenden Sensorknoten durchzuführen. Dies bedeutet einen erheblichen Energieverlust.

Dokumente US 2005/122231 A1 und US 2005/058151 entsprechen das Präambel des Anspruchs 1.

Aufgabe der Erfindung ist es, ein Verfahren bereitzustellen, mit dem die Möglichkeit geschaffen wird, eine möglichst sichere und zuverlässige Kommunikation zwischen einzelnen Sensorknoten und einem Empfangsknoten zu gewährleisten, selbst wenn mehrere Sensorknoten innerhalb der Zeitdauer, in der der Empfangsknoten auf Empfang geht, ihre Telegramme absenden.
Gelöst wird diese Aufgabe dadurch, dass die Zeitdauer, innerhalb der ein Empfangsknoten von mehreren Sensorknoten Telegramme empfangen kann, in mehrere Zeitabschnitte unterteilt ist, wobei die Wahrscheinlichkeit, dass ein Sensorknoten in einem bestimmten Zeitabschnitt ein Telegramm sendet, von wenigstens einem vorgegebenen oder vorgebbaren Parameter abhängt. Die Erfindung ist durch Anspruch 1 definiert. Ausführungsbeispiele sind durch die abhängigen Ansprüche definiert. Wesentlicher Kerngedanke dieses erfindungsgemäßen Verfahrens ist es demnach, dass für die einzelnen Sensorknoten, die eine Information, z.B. Verbrauchsdaten im Rahmen eines Telegramms absenden und an den Empfangsknoten weiterleiten wollen, die Festlegung, wann sie innerhalb der zur Verfügung stehenden Zeitdauer, d.h. in welchem der mehreren Zeitabschnitte sie ein Telegramm senden, abhängig ist von einer Wahrscheinlichkeit, die durch eines beliebigen Systemparameter vorgebbar ist und die insbesondere abweichend ist von einer Gleichverteilung der Wahrscheinlichkeit für alle beteiligten Sensorknoten..

Aus diesem Grunde gibt es wegen einer von der Gleichverteilung für alle Sensorknoten abweichenden Wahrscheinlichkeit, die durch beliebige Parameter definiert sein kann bzw. vorgegeben sein kann, statistische Häufungen von ausgesendeten Telegrammen, so dass es zwar in bestimmten Zeitabschnitten der vorgegebenen Zeitdauer zu Kollisionen kommen kann, jedoch wird mit einer in der Gesamtbetrachtung höheren Wahrscheinlichkeit im Vergleich zur Gleichverteilung wenigstens einer der Sensorknoten sein abzusendendes Telegramm in einem Zeitabschnitt senden, in dem keiner der übrigen aufgeforderten Sensorknoten ebenfalls ein Telegramm versendet, so dass durch eine von wenigstens einem äußeren Parameter abhängige Wahrscheinlichkeit dazu beigetragen werden kann, kollisionsfreie Zeitabschnitte zu schaffen, in denen erfolgreich zumindest einer der Sensorknoten, welcher von einem Empfangsknoten ein Synchronisationstelegramm empfängt, sein abzusendendes Telegramm an einen Empfangsknoten übermitteln kann.

Hierbei kann es in einer ersten Ausführung der Erfindung vorgesehen sein, dass zumindest ein Sensorknoten beispielsweise in einem Telegramm, welches er in einem der zur Verfügung stehenden Zeitabschnitte gemäß der vorgegebenen oder vorgebbaren Wahrscheinlichkeit versendet, unmittelbar auch seine Sensordaten, d.h. beispielsweise Verbrauchsdaten oder gegebenenfalls auch andere Daten, wie beispielsweise Statusmeldungen, Fehlermeldungen oder ähnliches übersendet.

Es hat sodann am Ende der für den Empfang am Empfangsknoten vorgesehenen Zeitdauer zumindest ein erfolgreicher Datenaustausch stattgefunden.

Gemäß einer anderen Ausführung des erfindungsgemäßen Verfahrens kann es vorgesehen sein, dass ein Telegramm, welches ein Sensorknoten nach Empfang wenigstens eines Synchronisationstelegramms aussendet, ein Bewerbungstelegramm darstellt. Demnach enthält ein derartiges Telegramm noch keine Daten, d.h. insbesondere keine Verbrauchsdaten, sondern lediglich eine Mitteilung, gemäß der ein Sensorknoten an einen Empfangsknoten mitteilt, dass er Daten, insbesondere Verbrauchsdaten übersenden möchte.

In Äquivalenz zum oben genannten Verfahren, gemäß dem sofortig wenigstens von einem der Sensorknoten Daten übermittelt werden können, wird bei dieser verfahrensmäßigen Ausbildung sich zumindest einer der aufgeforderten Sensorknoten erfolgreich um die später folgende Datenübertragung bewerben. Ein derartiges Bewerbungstelegramm kann demnach auch als RTS-Telegramm bezeichnet werden (Request To Send-Telegramm).

Ist demnach zumindest in einem der mehreren.Zeitabschnitte eine kollisionsfreie Übertragung eines Bewerbungstelegramms von wenigstens einem Sensorknoten geglückt, so kann es gemäß des erfindungsgemäßen Verfahrens weiterhin vorgesehen sein, dass der Empfangsknoten bei diesem kollisionsfreien Empfang wenigstens einen der Sensorknoten, bzw. sofern von mehreren Sensorknoten kollisionsfrei Bewerbungstelegramme versendet wurden, auch an mehrere Sensorknoten ein Aufforderungstelegramm versendet, insbesondere ein sogenanntes CTS-Telegramm (Clear To Send), um somit den wenigstens einen angesprochenen Sensorknoten aufzufordern, seine Daten an den Empfangsknoten zu übertragen.

Hierbei kann gegebenenfalls ein Aufforderungstelegramm eine Information darüber enthalten, zu welchem Zeitpunkt die Datenübertragung erfolgen soll. Dies kann insbesondere dann von Vorteil sein, wenn sich erfolgreich innerhalb der für den Empfang vorgesehenen Zeitdauer mehrere Sensorknoten kollisionsfrei beworben haben, so dass anschließend auch mehrere Sensorknoten aufgefordert werden, bevorzugt zeitlich nacheinander ihre Daten an den Empfangsknoten zu versenden. Um diese zeitliche Abfolge der Datenversendung zu koordinieren, kann demnach ein Aufforderungstelegramm Informationen über den Zeitpunkt enthalten, wann die Datensendung erfolgen soll.

Insbesondere wenn nur ein Sensorknoten aufgefordert wird, seine Daten abzusenden, erfolgt die Datenversendung sodann üblicherweise unmittelbar nach dem Empfang des Aufforderungstelegramms bei dem Sensorknoten, so dass sodann die Datenkommunikation zwischen diesen beiden Knoten einsetzt.

In einer bevorzugten Ausführungsvariante des erfindungsgemäßen Verfahrens kann es dabei vorgesehen sein, dass der Parameter, von dem die Wahrscheinlichkeit abhängt, durch eine Ordnungsnummer gebildet wird, die einem jeden Zeitabschnitt zugewiesen ist, so dass die Wahrscheinlichkeit, dass ein Sensorknoten in einem bestimmten Zeitabschnitt der zur Verfügung stehenden Zeitdauer ein Telegramm sendet, von der Ordnungsnummer dieses Zeitabschnittes abhängt. Hierbei ist es unerheblich, ob die einzelnen Zeitabschnitte in der zeitlichen Abfolge mit aufsteigenden oder fallenden Ordnungsnummern durchnummeriert werden oder ob gegebenenfalls eine willkürliche Nummerierung stattfindet.

Hierbei kann es vorgesehen sein, dass keiner der insgesamt vorgesehenen Zeitabschnitte eine Ordnungsnummer aufweist, die mit der Ordnungsnummer eines anderen Zeitabschnittes übereinstimmt. So kann es vorgesehen sein, dass sich für keine zwei Zeitabschnitte aus der Gesamtanzahl der Zeitabschnitte, in die die Zeitdauer unterteilt ist, sich eine gleiche Wahrscheinlichkeit ergibt, dass gerade in diesen Zeitabschnitten ein Sensorknoten sein Telegramm versendet.

Hierbei kann grundsätzlich die Berechnungsvorschrift, aus der sich die Wahrscheinlichkeit in Abhängigkeit von der Ordnungsnummer ergibt, beliebig sein.

Wird die Ordnungsnummer beispielsweise mit dem Zeichen S beziffert, so kann die Wahrscheinlichkeit in einer Ausführung gewählt sein als 1/2^{s}. Selbstverständlich sind beliebige andere Berechnungsvorschriften für die Wahrscheinlichkeit möglich.

Beispielsweise kann es in einer Ausführungsvariante vorgesehen sein, dass die Wahrscheinlichkeit mit zunehmender Ordnungsnummer fällt, ebenso besteht die Möglichkeit, dass die Wahrscheinlichkeit mit zunehmender Ordnungsnummer steigt. So kann sich insbesondere mit Bezug auf das vorgenannte Beispiel insbesondere mit steigender oder fallender Ordnungsnummer die Wahrscheinlichkeit beginnend bei einer Anfangswahrscheinlichkeit jeweils halbieren. Im vorgenannten Beispiel war die Anfangswahrscheinlichkeit beginnend bei einer Ordnungsnummer von 1 zu (1/2) gewählt, wobei sich die Wahrscheinlichkeit dann jeweils halbiert, d.h. beim Zeitabschnitt mit der Ordnungsnummer 2 beträgt die Wahrscheinlichkeit, dass ein Sensorknoten in diesem Zeitabschnitt sein Telegramm versendet, nur (¼).

Neben dieser vorgenannten beispielhaften und besonders einfachen Zuordnung einer möglichen Wahrscheinlichkeit zu den verschiedenen Zeitabschnitten, die insbesondere von einer Gleichverteilung abweicht, kann die Wahrscheinlichkeit abhängig sein von wenigstens einem der folgenden Parameter: der Sensornummer eines Sensorknotens, dem Alter der zu versendenden Daten, der Menge der zu versendenden Daten, der Priorität, die einer Statusmeldung, insbesondere einer Fehlermeldung zugeordnet ist, der Anzahl der im Empfangsbereich liegenden Knoten, insbesondere bei denen Daten vorliegen, einer Vorgabe eines Empfangsknotens, die insbesondere durch Aussendung eines Synchronisationstelegramms mitgeteilt wird. Hier sind beliebige weitere Parameter denkbar, die im Rahmen des Verfahrens vorgebbar sein können.

Wird die Wahrscheinlichkeit abhängig gemacht von der Seriennummer eines Sensorknotens, die für keine zwei verschiedenen Sensorknoten identisch ist, so wird hierdurch im Rahmen des Verfahrens grundsätzlich eine Bevorzugung von bestimmten Sensorknoten innerhalb des Netzes erreicht.

Wird hingegen das Alter der zu versendenden Daten als Parameter zur Bestimmung einer Wahrscheinlichkeit herangezogen, so kann in bevorzugter Ausführung erreicht werden, dass gerade diejenigen Sensorknoten, bei denen Verbrauchsdaten schon besonders lange Zeit für eine Versendung oder insbesondere einen Weitertransport in einen Empfangsknoten anstehen, bevorzugt ihre Daten versenden können, da diese Sensorknoten Ihre Telegramme in diejenigen Zeitabschnitt hineinsenden, die eine entsprechend hohe Wahrscheinlichkeit aufweisen.

Hierbei kann es beispielsweise vorgesehen sein, dass die Sensorknoten mit bereits schon längere Zeit vorliegenden Daten am Anfang der zur Verfügung stehenden Empfangszeitdauer des Empfangsknotens ihr Telegramm versenden, so beispielsweise im ersten oder in den ersten zur Verfügung stehenden Zeitabschnitten dieser Zeitdauer.

In einer anderen Alternative kann die Wahrscheinlichkeit abhängig gemacht werden von der Menge der zu versendenden Daten, was bedeutet, dass in Äquivalenz zum Alter der Daten diejenigen Sensorknoten bevorzugt ihre Daten versenden können, bei denen eine hohe Datenmenge ansteht. Selbstverständlich kann die Wahrscheinlichkeitsverteilung auch umgekehrt gewählt werden, so dass bevorzugt die Sensorknoten ihre Daten versenden können, bei denen nur wenig Daten zur Versendung anstehen.

In einer anderen Ausführung kann es vorgesehen sein, dass die Wahrscheinlichkeit abhängig gemacht wird von Prioritäten, wie z.B. einer Statusmeldung, die einer Fehlermeldung zugeordnet sein kann. Hat eine derartige Fehlermeldung beispielsweise eine hohe Priorität, so kann vorgesehen sein, dass eine derartige Fehlermeldung in einem Zeitabschnitt abgesendet wird, welcher für eine derartige Statusmeldung eine hohe Sendewahrscheinlichkeit definiert.

Weiterhin kann es vorgesehen sein, dass die Wahrscheinlichkeit abhängig ist von der Anzahl der im Empfangsbereich liegenden Knoten. Sind beispielsweise sehr viele Knoten zu berücksichtigen, die Daten mit einem Empfangsknoten austauschen wollen, so kann grundsätzlich eine andere Wahrscheinlichkeitsverteilung für die zur Verfügung stehenden Zeitabschnitte gewählt sein im Vergleich dazu, wenn nur eine geringe Anzahl von Knoten von dem Synchronisationstelegramm des Empfangsknoten angesprochen werden.

Letztendlich kann es vorgesehen sein, dass ein Empfangsknoten z.B. durch die Aussendung seines Synchronisationstelegramms eine Vorgabe gibt, mit welcher Wahrscheinlichkeit alle oder auch nur bestimmte angesprochene Sensorknoten ihre Telegramme auf die jeweils zur Verfügung stehenden Zeitabschnitte verteilen.

Hier kann es insbesondere auch vorgesehen sein, dass in einem Synchronisationstelegramm eine Information darüber enthalten ist, welcher der empfangenen Sensorknoten in welchem bestimmten Zeitabschnitt sein Telegramm versenden soll. Hier kann demnach gegebenenfalls die Wahrscheinlichkeit, dass ein bestimmter angesprochener Sensorknoten in einem bestimmten Zeitabschnitt sein Telegramm versendet, auch gleich 1 sein. Hierdurch ergibt sich somit für jeden Sensorknoten zwar eine Wahrscheinlichkeit von 1, aber jeweils in einem anderen Zeitabschnitt.

Um Kollisionen in der zur Verfügung stehenden Zeitdauer, die erfindungsgemäß in Zeitabschnitte unterteilt ist, weiterhin zu vermeiden, kann es in einer erfindungsgemäßen Weiterbildung vorgesehen sein, dass Telegramme, seien es direkt sofort Datentelegramme oder auch zunächst nur Bewerbungstelegramme nur von denjenigen Sensorknoten ausgesendet werden, bei denen auch zu versendende Sensordaten anstehen. Demnach stehen Sensorknoten, die zwar grundsätzlich im Empfangsbereich eines Synchronisationstelegramms liegen, nicht in Konkurrenz mit anderen Sensorknoten, wenn keine Daten in diesen Sensorknoten vorliegen, die es zu übersenden gilt. Hierdurch kann demnach das Sende- bzw. Verkehrsaufkommen von Telegrammen zwischen den einzelnen Knoten reduziert werden.

In einer anderen Weiterbildung kann es auch vorgesehen sein, dass ein Sensorknoten, der einen Datenaustausch mit einem Empfangsknoten erfolgreich vorgenommen hat, keine weiteren Telegramme an Empfangsknoten aussendet, insbesondere bis dass bei dem Sensorknoten neue zu versendende Daten anstehen.

Dies bedeutet im Wesentlichen, dass nach dem erfolgreichen Datenaustausch ein derartiger Sensorknoten, selbst wenn er danach erneut die Synchronisationstelegramme eines Empfangsknoten empfängt, nicht erneut ein Telegramm versendet, um in Kommunikation mit dem Empfangsknoten zu treten. Auch hierdurch kann insgesamt die Belastung an verwendeten Telegrammen im Sensornetzwerk reduziert werden.

In einer anderen Weiterbildung kann es auch vorgesehen sein, dass nur diejenigen Sensorknoten Telegramme aussenden, die in einer internen Tabelle denjenigen Empfangsknoten, der ein Synchronisationstelegramm aussendet, als einen möglichen Empfänger für Sensordaten gespeichert haben. So kann demnach auch durch das Vorhandensein einer solchen Tabelle eine Kollisionsrate reduziert werden, da zwar grundsätzlich ein Sensorknoten ein Synchronisationstelegramm empfangen kann, jedoch in der internen Tabelle dieser sendende Knoten nicht als möglicher Empfänger von Daten gespeichert ist, so dass aus diesem Grunde der Sensorknoten von der Aussendung eines Telegramms absieht. Durch die Definition einer derartigen intern in den Sensorknoten vorliegenden Tabelle können demnach auch Definitionen geschaffen werden, gemäß denen die einzelnen Sensorknoten untereinander in Verbindung treten können, so dass auch hierdurch die möglichen Wege eines Datenflusses im Sensornetzwerk definiert sein können.

In einer anderen Weiterbildung des Verfahrens kann es auch vorgesehen sein, dass nach dem Aussenden wenigstens eines, insbesondere speziell dafür vorgesehener Synchronisationstelegramms alle Sensorknoten, unabhängig davon, ob ihnen zu versendende Daten vorliegen, ein Telegramm versenden. Ein derartiges Telegramm, weiches in dieser Ausführung weder Verbrauchsdaten umfasst, noch als Bewerbungstelegramm zu verstehen ist, kann z.B. dafür vorgesehen sein, um die Empfangssituation für zukünftige Sendungen zu prüfen oder um die Zahl der in Empfangsreiche befindlichen Sensorknoten zu ermitteln. So kann anhand dieser Information, die ein Empfangsknoten hierdurch ansammelt, das weitere Verfahren zum Austausch von Daten bestimmt werden, beispielsweise kann hierdurch festgelegt werden, wie die Wahrscheinlichkeit über die einzelnen Zeitabschnitte verteilt ist, insbesondere wenn eine hohe oder eine geringe Anzahl von kommunikationsbereiten Sensorknoten ermittelt oder erwartet wird.

Es besteht ebenso die Möglichkeit, dass mit Aussendung wenigstens eines Synchronisationstelegramms nur ein bestimmter Teil von Sensorknoten aufgefordert wird, Telegramme zu versenden. Hierfür können die aufgeforderten Sensorknoten in einem Synchronisationstelegramm verschlüsselt werden.

In einer bevorzugten Weiterbildung kann es vorgesehen sein, dass die Anzahl der Zeitabschnitte abhängig ist von der Anzahl, insbesondere der erwarteten Anzahl von Sensorknoten, die Daten senden wollen. Liegt beispielsweise nur eine geringe Anzahl von Sensorknoten vor oder wird sie erwartet, so kann auch die Anzahl der Zeitabschnitte, insbesondere auch die Zeitdauer an sich reduziert werden, da bei einer geringeren Anzahl von Sensorknoten auch mit einer geringeren Kollisionswahrscheinlichkeit zu rechnen ist.

Ist demgegenüber die insbesondere erwartete Anzahl der Sensorknoten hoch, so kann auch die Anzahl der Zeitabschnitte höher gewählt werden bzw. es kann auch die Länge der zur Verfügung stehenden Zeitdauer verlängert werden.

Es besteht demnach grundsätzlich die Möglichkeit, beispielsweise die Zeitdauer zu verlängern und hierbei Zeitabschnitte hinsichtlich ihrer Breite gleich zu belassen, wodurch die Anzahl der Zeitabschnitte erhöht wird oder aber es besteht auch die Möglichkeit, bei konstant beibehaltener Zeitdauer die Breite der Zeitabschnitte zu verändern, um die Anzahl dieser Zeitabschnitte zu vergrößern oder zu verkleinern.

Hierbei kann die Auswahl der Anzahl der Zeitabschnitte beispielsweise von einem Empfangsknoten bei der Aussendung eines Synchronisationstelegramms festgelegt werden und gegebenenfalls an die empfangenden Sensorknoten übermittelt werden, wobei hierfür insbesondere die erwartete Anzahl von Sensorknoten relevant sein kann. Die erwartete Anzahl von Sensorknoten kann sich beispielsweise ergeben aus einer Information, die dem Empfangsknoten vorliegt aus einem früheren Datenaustausch bzw. einer früheren Aussendung eines oder mehrerer ggfs. speziell dafür vorgesehener Synchronisationstelegramme.

Wie bereits eingangs genannt, kann der Empfangsknoten beispielsweise von einem beliebigen Sensorknoten des Sensornetzwerkes gebildet sein. Ebenso besteht die Möglichkeit, dass ein separates mobiles Empfangsgerät einen Empfangsknoten bildet. Ebenso kann wie vorgenannt eine ausgezeichnete zentrale Empfangsstation einen Empfangsknoten im Sinne der Erfindung bilden.

In einer bevorzugten Ausführung kann es auch vorgesehen sein, dass der Empfangsknoten unmittelbar nach oder mit der Aussendung eines Synchronisationstelegramms die Anzahl der Sensorknoten an die Sensorknoten übermittelt, die auf ein empfangenes Synchronisationstelegramm mit der Aussendung eines Telegramms antworten dürfen. Es können so aus der übermittelten Anzahl die Sensorknoten selbst die Wahrscheinlichkeit ermitteln, mit der der betreffende Sensorknoten in einem bestimmten Zeitabschnitt ein Telegramm senden darf. Diese Wahrscheinlichkeit kann für einen Zugriff auf einen bestimmten vorgegebenen Zeitabschnitt z.B. gesetzt werden auf W = (1/N) x (1 - 1/N)^{N-1}.

Hierbei ist N ein von dem Empfangsknoten übertragener Parameter, der - insbesondere möglichst gut - der Anzahl der Sensorknoten entsprechen soilte. Es kann hierdurch sichergestellt werden, dass unabhängig von der Knotenanzahl immer ein konstanter Anteil an Sensorknoten mit einem Telegramm, beispielsweise einem Bewerbungstelegramm, erfolgreich ist. Dieser verfahrensmäßige Aspekt eignet sich insbesondere dann, wenn die Anzahl der zur Verfügung stehenden Zeitabschnitte konstant ist, die Anzahl der Sensorknoten aber beliebig werden kann und es dennoch erforderlich ist, dass nach jedem Synchronisationstelegramm die kollisionsfreie Übersendung eines Telegramms, beispielsweise eines Bewerbungstelegramms mindestens eines Sensorknotens erfolgreich war.

Bereits vorangehend wurde erwähnt, dass die Anzahl der Sensorknoten abgeschätzt werden kann, beispielsweise aus einer Information von vergangenen Telegrammkommunikationen bzw. Wettbewerben zwischen den einzelnen Sensorknoten. Gemäß einem vorgebbaren Verfahren kann dieser Schätzwert, welche an die Sensorknoten gemäß vorgenanntem Verfahrensaspekt übermittelt wird, z.B. erhöht werden, wenn nach der Aussendung eines vorangegangenen Synchronisationstelegramms keiner der Sensorknoten kollisionsfrei sein Telegramm an einen Empfangsknoten übermitteln konnte. So kann bei andauernden Kollisionen, d.h. wenn nach Übersendung eines Synchronisationstelegramms keine erfolgreiche Telegrammübertragung möglich war, jedes Mal die Anzahl der abgeschätzten Sensorknoten erhöht werden und im umgekehrten Fall, wenn eine erfolgreiche Übermittlung eines Telegramms möglich war, die Anzahl der Sensorknoten verringert werden.

Bezogen auf die vorgenannten Ordnungsnummern S kann die Wahrscheinlichkeit abweichend von (1/2)^{S} auch gewählt werden zu (1/k)^{S}, wobei K ein vorgebbarer Wert sein kann, beispielsweise kann der Wert K vorgegeben sein durch die Anzahl der Sensorknoten oder zumindest in Abhängigkeit der Anzahl der Sensorknoten. Insbesondere kann der Wert K eine natürliche Zahl größer gleich 2 annehmen.

Ausführungsbeispiele der Erfindung sind in den nachfolgenden Figuren dargestellt. Es zeigen:
- Figur 1: den zeitlichen Ablauf der Kommunikation zwischen insgesamt vier Sensorknoten, von denen einer einen Empfangsknoten bildet
- Figur 2: einen Ablauf gemäß Figur 1, bei dem jedoch ein Sensorknoten mehr als ein Telegramm innerhalb der Empfangszeitdauer sendet.

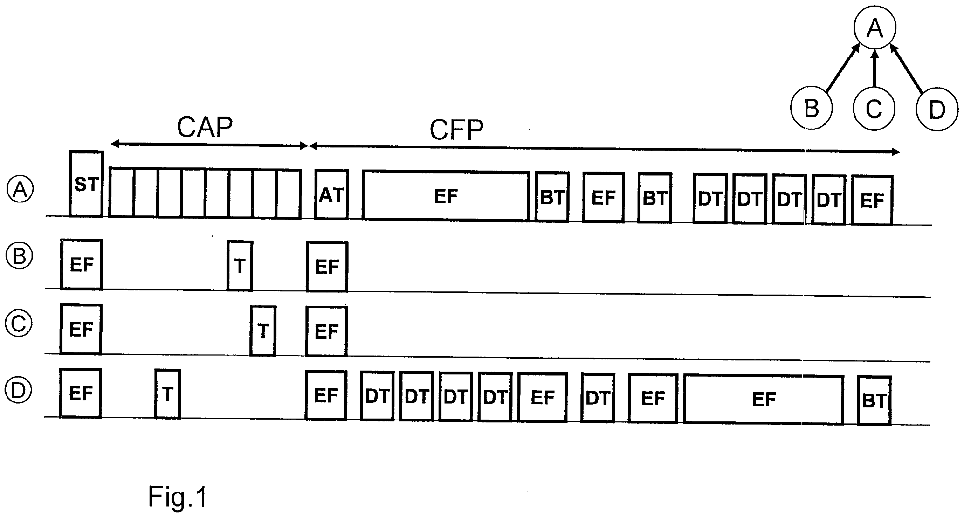

In der Figur 1 ist exemplarisch der Fall dargestellt, gemäß dem drei Sensorknoten B, C und D ihre Verbrauchsdaten an einen Empfangsknoten A übersenden wollen. Dieser Empfangsknoten A kann in einem hierarchischen Sensornetzwerk beispielsweise in einer Ebene oberhalb der Sensorknoten B, C und D angeordnet sein, wie es die grafische Abbildung darstellt. Gemäß dem erfindungsgemäßen Verfahren ist es vorgesehen, dass der Empfangsknoten A zu einem vorgegebenen Zeitpunkt ein Synchronisationstelegramm ST versendet. Ein derartiges Synchronisationstelegramm ST kann nur empfangen werden, wenn zum gleichen Zeitpunkt, idealerweise kurz vorher, die Sensorknoten B, C und D ein jeweiliges Empfangsfenster EF öffnen, innerhalb dem der Empfang dieses einen Synchronisationstelegramms möglich ist.

Es kann sodann in dem Netzwerk die Zeitdauer des Empfangs des Sensorknotens bzw. nun als Empfangsknoten arbeitenden Knotens A vorgegeben sein oder diese Zeitdauer wird beispielsweise an die Sensorknoten B, C, und D innerhalb des Synchronisationstelegramms ST übermittelt, so dass in jedem Falle den einzelnen Sensorknoten B, C und D die maximale Zeitdauer, die für den Empfang von Telegrammen bei dem Empfangsknoten A zur Verfügung steht, bekannt ist.

Weiterhin ist den Sensorknoten B, C und D bekannt, welche Einteilung der Zeitdauer in aufeinanderfolgende Zeitabschnitte vorgegeben ist, wobei diese Zeitdauer im vorliegenden Fall eine sogenannte CAP-Phase (Contention Access Period) bildet. Im vorliegenden Fall ist die Zeitdauer CAP unterteilt in acht gleich lange Zeitabschnitte.

Gemäß der Erfindung ist es vorgesehen, dass für jeden dieser Zeitabschnitte eine andere Wahrscheinlichkeit gilt, gemäß der ein Sensorknoten B, C und D in einem jeweiligen Zeitabschnitt sein Telegramm T platziert, mit dem sich ein Sensorknoten B, C und D in dieser Ausführung darum bewirbt, mit dem Empfangsknoten A seine Verbrauchsdaten auszutauschen. Ein solches Telegramm kann z.B. als RTS-Telegramm (Request-To-Send) bezeichnet werden.

Im vorliegenden Fall sind die drei Bewerbungstelegramme T, welche jeweils die Sensorknoten B, C und D versenden, allesamt kollisionsfrei und belegen keine gleichen Zeitabschnitte. Aufgrund dieses kollisionsfreien Empfangs kann somit der Empfangsknoten A jedes dieser Bewerbungstelegramme empfangen und grundsätzlich mit jedem der einzelnen Sensorknoten B, C und D in Kommunikation treten, um Verbrauchsdaten auszutauschen, wobei es hier gemäß dem bevorzugten Verfahren vorgesehen ist, dass der Empfangsknoten A denjenigen Sensorknoten auswählt, dessen Bewerbungstelegramm als erstes kollisionsfrei empfangen wurde.

So wählt hier der Empfangsknoten A den Sensorknoten D aus, indem der Empfangsknoten A ein Aufforderungstelegramm AT versendet, welches grundsätzlich in entsprechend dafür vorgesehenen zeitlich platzierten Empfangsfenstern EF aller Sensorknoten B, C, D empfangen werden kann, wobei jedoch in dem Aufforderungstelegramm eine Information enthalten ist, dass nur der Sensorknoten D aufgefordert ist, seine Daten zu übersenden, was dieser sodann in den vier aufeinanderfolgenden Datentelegrammen DT vornimmt, die in dem zeitlich gleich gelagerten Empfangsfenster EF des Empfangsknotens A empfangen werden. Ein solches Aufforderungstelegramm AT kann auch als CTS-Telegramm (Clear-To-Send) bezeichnet werden.

Mittels eines Bestätigungstelegramms BT, welches im Empfangsfenster EF des Sensorknotens D empfangen wird, bestätigt der Empfangsknoten A den einwandfreien Empfang der Daten und kann sodann gegebenenfalls weitere Daten DT im erneuten Empfangsfenster EF empfangen.

Ebenso besteht die Möglichkeit, im folgenden zeitlichen Verlauf, dass der Empfangsknoten A auch Datentelegramme DT an den Sensorknoten D übersendet. Dies ist nicht zwingend notwendig, bildet jedoch eine weitere Verfahrensmaßnahme.

Der weitere Datenaustausch kann im Prinzip in gleicher Weise wie vom Knoten D zu Knoten A erfolgen, wobei nunmehr jedoch der Sensorknoten D am Ende der Empfangsphase EF ein Bestätigungstelegramm DT sendet, welches im dafür vorgesehenen Empfangsfenster EF des Empfangsknoten A empfangen wird. Es hat somit nach Bewerbung von mehreren Sensorknoten B, C und D ein erfolgreicher Datenaustausch mit dem Sensorknoten D stattgefunden.

Gegebenenfalls kann es vorgesehen sein, dass automatisch nach diesem Datenaustausch der Austausch mit den anderen Knoten B und C initiiert wird, beispielsweise durch Aussendung eines neuen Aufforderungstelegramms seitens des Sensorknotens A.

Ebenso kann es vorgesehen sein, dass die Bewerbungsphase, wie sie in der Figur 1 dargestellt wird, von vorne beginnt, d.h. dass der Knoten A ein erneutes Synchronisationstelegramm ST oder auch mehrere davon aussendet um eine bessere Überlappwahrscheinlichkeit mit Empfangsfenstern EF bei den Sensorknoten zu erzeugen, wobei jedoch dann bevorzugt der Sensorknoten D nicht mehr auf dieses Synchronisationstelegramm ein Bewerbungstelegramm aussendet, da in diesem Sensorknoten aktuell keine zu versendenden Daten vorliegen.

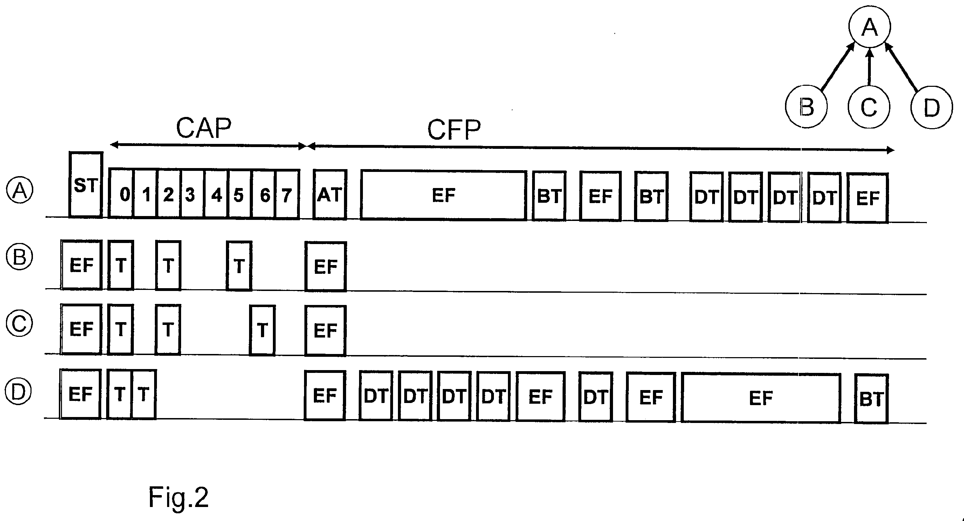

Die Figur 2 zeigt gegenüber der Figur 1 im Wesentlichen die Weiterbildung, dass innerhalb der Zeitdauer CAP, welche hier in acht einzelne Zeitabschnitte SO bis S7 unterteilt ist, ein Sensorknoten nicht nur ein Bewerbungstelegramm T versendet, sondern gegebenenfalls mehrere, wobei die Aussendung dieser Bewerbungstelegramme T gemäß einer vorgegebenen Wahrscheinlichkeit anhand der Ordnungsnummer SO bis S7 bestimmt sein kann.

Es ist hier erkennbar, dass im Zeitabschnitt S=0 drei Telegramme T der Sensorknoten B, C und D kollidieren, so dass ein Empfang nicht möglich ist. Das erste kollisionsfrei empfangene Telegramm ist das Telegramm T des Sensorknotens D im Zeitabschnitt S=1. Demnach wird in Äquivalenz zu dem beschriebenen Verfahren der Figur 1 nunmehr der Empfangsknoten A durch Aussendung eines Aufforderungstelegramms AT nur den Sensorknoten D auffordern, seine Daten zu übermitteln, welches wie zur Figur 1 beschrieben, erfolgt.

Abweichend von der hier beispielsweise genannten Ausführung kann eine Nummerierung mit Ordnungsnummern S auch bei einer anderen Zahl als 0 beginnen, z.B. bei 1, oder jeder beliebigen anderen Zahl. Ebenso ist es möglich, dass die Nummerierung beliebig ist.

## Patentansprüche

1. Verfahren zur Kommunikation mehrerer Sensorknoten (B, C, D) in einem Sensornetzwerk mit einem Empfangsknoten (A), wobei ein Empfangsknoten (A) durch Aussendung wenigstens eines Synchronisationstelegramms (ST) andere Sensorknoten (B, C, D) auffordert, Sensordaten (DT) an den Empfangsknoten (A) zu übersenden, wofür der Empfangsknoten (A) für eine Zeitdauer (CAP)auf Empfang geht, um Telegramme (T) von wenigstens einem anderen Sensorknoten (B, C, D) zu empfangen, wobei die Zeitdauer (CAP) in mehrere Zeitabschnitte (0,...,7) unterteilt ist und die Wahrscheinlichkeit, dass ein Sensorknoten (B,C,D) in einem bestimmten Zeitabschnitt (0,....,7) ein Telegramm (T) sendet, von wenigstens einem vorgegebenen/vorgebbaren Parameter abhängt **dadurch gekennzeichnet, dass** die Wahrscheinlichkeit von einer Gleichverteilung der Wahrscheinlichkeit für alle Sensorknoten (B, C, D) abweicht und sich für keine zwei Zeitabschnitte (0,...,7) aus der Gesamtanzahl der Zeitabschnitte (0,...,7), in die die Zeitdauer (CAP) unterteilt ist, eine gleiche Wahrscheinlichkeit ergibt, dass in diesen Zeitabschnitten (0,...,7) ein Sensorknoten (B, C, D) sein Telegramm (T) versendet und hierdurch statistische Häufungen von ausgesendeten Telegrammen (T) entstehen, die in bestimmten Zeitabschnitten (0,...,7) der vorgegebenen Zeitdauer (CAP) zu Kollisionen führen und so wenigstens einer der Sensorknoten (B, C, D) mit einer in der Gesamtbetrachtung höheren Wahrscheinlichkeit im Vergleich zur Gleichverteilung sein abzusendendes Telegramm (T) in einem Zeitabschnitt (0,...,7) sendet, in dem keiner der übrigen aufgeforderten Sensorknoten (B, C, D) ebenfalls ein Telegramm (T) versendet.

2. Verfahren nach Anspruch 1, **dadurch gekennzeichnet, dass** die Telegramme (T) Bewerbungstelegramme sind.

3. Verfahren nach Anspruch 2, **dadurch gekennzeichnet, dass** ein Empfangsknoten (A) bei kollisionsfreiem Empfang eines Bewerbungstelegramms (T) wenigstens einen Sensorknoten (B, C, D) durch Aussenden eines Aufforderungstelegramms (AT)auffordert, seine Daten an den Empfangsknoten (A) zu übertragen.

4. Verfahren nach einem der vorherigen Ansprüche, **dadurch gekennzeichnet, dass** ein Sensorknoten (B, C, D) unmittelbar in einem Telegramm (T) Sensordaten versendet.

5. Verfahren nach einem der vorherigen Ansprüche, **dadurch gekennzeichnet, dass** der Parameter durch eine Ordnungsnummer (0,1,2,3,4,5,6,7) gebildet wird, die jedem Zeitabschnitt zugewiesen ist, so dass die Wahrscheinlichkeit, dass ein Sensorknoten (B,C,D) in einem bestimmten Zeitabschnitt ein Telegramm (T) sendet von der Ordnungsnummer (0,1,2,3,4,5,6,7) des Zeitabschnittes abhängt.

6. Verfahren nach Anspruch 5, **dadurch gekennzeichnet, dass** die Wahrscheinlichkeit mit zunehmender Ordnungsnummer (0,1,2,3,4,5,6,7) fällt/steigt.

7. Verfahren nach einem der vorherigen Ansprüche, **dadurch gekennzeichnet, dass** die Wahrscheinlichkeit abhängig ist von einem der folgenden Parameter:
a. die Seriennummer eines Sensorknotens (B,C,D)
b. das Alter der zu versendenden Daten
c. die Menge der zu versendenden Daten
d. die Priorität, die einer Statusmeldung zugeordnet ist
e. Die Anzahl der im Empfangsbereich liegenden Knoten, bei denen Daten vorliegen
f. Einer Vorgabe des Empfangsknotens (A), die durch Aussendung eines Synchronisationstelegramms (ST) mitgeteilt wird.

8. Verfahren nach einem der vorherigen Ansprüche, **dadurch gekennzeichnet, dass** Telegramme (T) nur von denjenigen Sensorknoten (B,C,D) ausgesendet werden, bei denen zu versendende Sensordaten anstehen.

9. Verfahren nach einem der vorherigen Ansprüche, **dadurch gekennzeichnet, dass** ein Sensorknoten (B,C,D), der einen Datenaustausch mit einem Empfangsknoten (A) vorgenommen hat, keine weiteren Telegramme (T) an Empfangsknoten (A) aussendet, bis dass bei dem Sensorknoten (B,C,D) neue zu versendende Daten anstehen.

10. Verfahren nach einem der vorherigen Ansprüche , **dadurch gekennzeichnet, dass** nur diejenigen Sensorknoten (B,C,D) Telegramme (T) aussenden, die in einer internen Tabelle den ein Synchronisationstelegramm (ST) aussendenden Empfangsknoten (A) als möglichen Empfänger für Sensordaten gespeichert haben.

11. Verfahren nach einem der vorherigen Ansprüche 1 bis 7, 9 oder 10, **dadurch gekennzeichnet, dass** nach Aussenden wenigstens eines Synchronisationstelegrammes (ST) alle Sensorknoten (B,C,D), unabhängig davon, ob bei ihnen zu versendende Daten vorliegen, ein Telegramm (T) versenden.

12. Verfahren nach einem der vorherigen Ansprüche, **dadurch gekennzeichnet, dass** mit Aussendung wenigstens eines Synchronisationstelegramms (ST) ein vorbestimmter Teil von Sensorknoten (B,C,D) aufgefordert wird, Telegramme (T) zu versenden, wofür die aufgeforderten Sensorknoten (B,C,D) in einem Synchronisationstelegramm (ST) verschlüsselt werden.

13. Verfahren nach einem der vorherigen Ansprüche, **dadurch gekennzeichnet, dass** die Anzahl der Zeitabschnitte abhängig ist von der Anzahlvon Sensorknoten (B,C,D), die Daten senden wollen.

14. Verfahren nach einem der vorherigen Ansprüche, **dadurch gekennzeichnet, dass** ein Empfangsknoten (A) gebildet wird von einem Sensorknoten (A,B,C,D) des Sensornetzwerkes oder einem mobilen separaten Empfangsgerät.

## Claims

1. Method for communication between a plurality of sensor nodes (B, C, D) in a sensor network and a receiving node (A), wherein a receiving node (A), by emitting at least one synchronization message (ST), requests other sensor nodes (B, C, D) to transmit sensor data (DT) to the receiving node (A), for which purpose the receiving node (A) changes to reception for a period (CAP) in order to receive messages (T) from at least one other sensor node (B, C, D), wherein the period (CAP) is subdivided into a plurality of time segments (0,...,7) and the probability of a sensor node (B, C, D) transmitting a message (T) in a particular time segment (0,...,7) depends on at least one predefined/predefinable parameter, **characterized in that** the probability differs from a uniform distribution of the probability for all sensor nodes (B, C, D), and an identical probability does not result for two time segments (0,...,7) from the total number of time segments (0,...,7) into which the period (CAP) has been subdivided, **in that** a sensor node (B, C, D) transmits its message (T) in these time segments (0,...,7) and statistical accumulations of emitted messages (T) are produced thereby and result in collisions in particular time segments (0,...,7) of the predetermined period (CAP), and at least one of the sensor nodes (B, C, D) thus transmits its message (T) to be transmitted, with a probability which is higher than the uniform distribution in the overall consideration, in a time segment (0,...,7) in which none of the other requested sensor nodes (B, C, D) is likewise transmitting a message (T).

2. Method according to Claim 1, **characterized in that** the messages (T) are advertisement messages.

3. Method according to Claim 2, **characterized in that,** if an advertisement message (T) is received without a collision, a receiving node (A) requests at least one sensor node (B, C, D), by emitting a request message (AT), to transmit its data to the receiving node (A).

4. Method according to one of the preceding claims, **characterized in that** a sensor node (B, C, D) transmits sensor data directly in a message (T).

5. Method according to one of the preceding claims, **characterized in that** the parameter is formed by an ordinal number (0, 1, 2, 3, 4, 5, 6, 7) which is allocated to each time segment, with the result that the probability of a sensor node (B, C, D) transmitting a message (T) in a particular time segment depends on the ordinal number (0, 1, 2, 3, 4, 5, 6, 7) of the time segment.

6. Method according to Claim 5, **characterized in that** the probability decreases/increases with increasing ordinal number (0, 1, 2, 3, 4, 5, 6, 7) .

7. Method according to one of the preceding claims, **characterized in that** the probability is dependent on one of the following parameters:
a. the serial number of a sensor node (B, C, D)
b. the age of the data to be transmitted
c. the volume of data to be transmitted
d. the priority assigned to a status message
e. the number of nodes containing data in the receiving area
f. a specification by the receiving node (A) which is communicated by emitting a synchronization message (ST).

8. Method according to one of the preceding claims, **characterized in that** messages (T) are emitted only by those sensor nodes (B, C, D) in which sensor data to be transmitted are pending.

9. Method according to one of the preceding claims, **characterized in that** a sensor node (B, C, D) which has interchanged data with a receiving node (A) does not emit any further messages (T) to receiving nodes (A) until new data to be transmitted are pending in the sensor node (B, C, D) .

10. Method according to one of the preceding claims, **characterized in that** only those sensor nodes (B, C, D) which have stored, in an internal table, the receiving node (A), which emits a synchronization message (ST), as a possible receiver for sensor data emit messages (T).

11. Method according to one of the preceding Claims 1 to 7, 9 or 10, **characterized in that,** after at least one synchronization message (T) has been emitted, all sensor nodes (B, C, D) transmit a message (T) irrespective of whether they contain data to be transmitted.

12. Method according to one of the preceding claims, **characterized in that,** with the emission of at least one synchronization message (ST), a predetermined portion of sensor nodes (B, C, D) is requested to transmit messages (T), for which purpose the requested sensor nodes (B, C, D) are encrypted in a synchronization message (ST).

13. Method according to one of the preceding claims, **characterized in that** the number of time segments is dependent on the number of sensor nodes (B, C, D) wishing to transmit data.

14. Method according to one of the preceding claims, **characterized in that** a receiving node (A) is formed by a sensor node (A, B, C, D) of the sensor network or a mobile separate receiving device.

## Revendications

1. Procédé de communication entre plusieurs noeuds capteurs (B,C,D) dans un réseau de capteurs avec un noeud de réception (A), un noeud de réception (A) sollicitant d'autres noeuds capteurs (B,C,D) par émission d'au moins un télégramme de synchronisation (ST) d'envoyer des données de capteur (DT) au noeud de réception (A), ce pour quoi le noeud de réception (A) passe en réception pour une durée (CAP) pour recevoir des télégrammes (T) d'au moins un autre noeud capteur (B,C,D), la durée (CAP) étant subdivisée en plusieurs périodes (0,...,7) et la probabilité qu'un noeud capteur (B,C,D) émette un télégramme (T) dans une certaine période (0,....,7) dépendant d'au moins un paramètre prédéfini/prédéfinissable, **caractérisé en ce que** la probabilité s'écarte d'une équipartition de la probabilité pour tous les noeuds capteurs (B,C,D) et qu'il en résulte pour aucune des deux périodes (0,...,7) du nombre total des périodes (0,...,7), dans lesquelles la période (CAP) est subdivisée, une probabilité identique qu'un noeud capteur (B,C,D) émette dans ces périodes (0,...,7) son télégramme (T) et que des accumulations statistiques de télégrammes (T) émis se produisent de ce fait, qui conduisent dans des périodes définies (0,...,7) de la durée prédéfinie (CAP) à des collisions et qu'ainsi au moins un des noeuds capteurs (B,C,D) émette son télégramme (T) à émettre avec une probabilité plus élevée dans l'ensemble en comparaison de l'équipartition dans une période (0,...,7), dans laquelle aucun des autres noeuds capteurs sollicités (B,C,D) n'émet de même un télégramme (T).

2. Procédé selon la revendication 1, **caractérisé en ce que** les télégrammes (T) sont des télégrammes publicitaires.

3. Procédé selon la revendication 2, **caractérisé en ce qu'**un noeud de réception (A) sollicite en cas de réception sans collision d'un télégramme publicitaire (T), au moins un noeud capteur (B,C,D) par émission d'un télégramme de sollicitation (AT) de transmettre ses données au noeud de réception (A).

4. Procédé selon l'une quelconque des revendications précédentes, **caractérisé en ce qu'**un noeud capteur (B,C,D) émet des données de capteur directement dans un télégramme (T).

5. Procédé selon l'une quelconque des revendications précédentes, **caractérisé en ce que** le paramètre est formé par un numéro d'ordre (0,1,2,3,4,5,6,7), qui est attribué à chaque période de sorte que la probabilité qu'un noeud capteur (B,C,D) émette dans une période définie un télégramme (T) dépende du numéro d'ordre (0,1,2,3,4,5,6,7) de la période.

6. Procédé selon la revendication 5, **caractérisé en ce que** la probabilité chute/augmente avec des numéros d'ordre croissants (0,1,2,3,4,5,6,7).

7. Procédé selon l'une quelconque des revendications précédentes, **caractérisé en ce que** la probabilité est fonction d'un des paramètres suivants :
a. le numéro de série d'un noeud capteur (B,C,D),
b. l'ancienneté des données à émettre,
c. la quantité de données à émettre,
d. la priorité qui est attribuée à un message d'état,
e. le nombre des noeuds situés dans la zone de réception pour lesquels il y a des données,
f. une consigne du noeud de réception (A) qui est communiquée par émission d'un télégramme de synchronisation (ST).

8. Procédé selon l'une quelconque des revendications précédentes, **caractérisé en ce que** des télégrammes (T) ne sont émis que par les noeuds capteurs (B,C,D) pour lesquels des données de capteur à émettre sont en attente.

9. Procédé selon l'une quelconque des revendications précédentes, **caractérisé en ce qu'**un noeud capteur (B,C,D) qui a procédé à un échange de données avec un noeud de réception (A), n'émet aucun autre télégramme (T) au noeud de réception (A) tant que de nouvelles données à émettre sont en attente au noeud capteur (B,C,D).

10. Procédé selon l'une quelconque des revendications précédentes, **caractérisé en ce que** n'émettent des télégrammes (T) que les noeuds capteurs (B,C,D) qui ont mémorisé dans un tableau interne le noeud de réception (A) émettant un télégramme de synchronisation (ST) en tant que récepteur possible pour des données de capteur.

11. Procédé selon l'une quelconque des revendications précédentes 1 à 7, 9 ou 10, **caractérisé en ce qu'**après émission d'au moins un télégramme de synchronisation (ST), tous les noeuds capteurs (B,C,D) émettent un télégramme (T) indépendamment du fait qu'ils disposent de données à émettre.

12. Procédé selon l'une quelconque des revendications précédentes, **caractérisé en ce qu'**avec émission d'au moins un télégramme de synchronisation (ST), une partie prédéfinie de noeuds capteurs (B,C,D) est sollicitée pour émettre des télégrammes (T), ce pourquoi les noeuds capteurs (B,C,D) sollicités sont codés dans un télégramme de synchronisation (ST).

13. Procédé selon l'une quelconque des revendications précédentes, **caractérisé en ce que** le nombre des périodes est fonction du nombre de noeuds capteurs (B,C,D) qui veulent envoyer des données.

14. Procédé selon l'une quelconque des revendications précédentes, **caractérisé en ce qu'**un noeud de réception (A) est formé d'un noeud capteur (A,B,C,D) du réseau de capteurs ou d'un appareil de réception mobile séparé.
